(19) Europäisches Patentamt
European Patent Office
Office européen des brevets

(11) **EP 2 515 213 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(51) Int Cl.:
**G06F 3/041** *(2006.01)* **G06F 3/044** *(2006.01)*
**G06F 3/045** *(2006.01)*

(21) Anmeldenummer: **12002617.4**

(22) Anmeldetag: **13.04.2012**

(54) **Eingabevorrichtung und Verfahren zur Positionsbestimmung**

Input device and method for detecting position

Dispositif d'entrée et procédé de détermination de position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2011 DE 102011018463**

(43) Veröffentlichungstag der Anmeldung:
**24.10.2012 Patentblatt 2012/43**

(73) Patentinhaber: **TRW Automotive Electronics & Components GmbH**
**78315 Radolfzell (DE)**

(72) Erfinder: **Backes, Ulrich**
**78315 Radolfzell (DE)**

(74) Vertreter: **Prinz & Partner mbB**
**Patent- und Rechtsanwälte**
**Rundfunkplatz 2**
**80335 München (DE)**

(56) Entgegenhaltungen:
**DE-A1- 3 230 919     US-A1- 2007 165 004**
**US-B2- 7 148 704**

**Beschreibung**

Die Erfindung betrifft eine Eingabevorrichtung mit einer Berührplatte sowie ein Verfahren zur Positionsbestimmung eines Objekts auf einer Berührplatte einer Eingabevorrichtung.

Eingabevorrichtungen mit Berührplatten sind aus dem Stand der Technik beispielsweise als Touchpads oder Touchscreens bekannt. Zur Positionsbestimmung eines Objekts, beispielsweise eines Fingers, auf der Berührplatte sind resistive, kapazitive und induktive Vorrichtungen bekannt. Derartige Vorrichtungen benötigen eine komplexe Anordnung der Sensorik.

In der DE 32 30 919 A1 ist eine Eingabevorrichtung gezeigt, die es ermöglicht, einen beliebigen Punkt auf einer Berührplatte bei dessen Berührung zu lokalisieren, indem verschiedene elektrische Impedanzen einer leitfähigen Oberflächenbeschichtung gemessen werden.

Die US 7,148,704 B2 beschreibt eine Eingabevorrichtung, mit der die Position eines Objektes auf einem elektrisch leitfähigen Streifen in einer Dimension bestimmt werden kann.

Aus der US 2007/0165004 A1 ist eine Eingabevorrichtung bekannt, die die Positionsbestimmung auf einer ringförmigen elektrisch leitfähigen Schicht ermöglicht.

Aufgabe der Erfindung ist es, eine Eingabevorrichtung mit einer Berührplatte sowie ein Verfahren zur Positionsbestimmung zu schaffen, welches einen einfachen Aufbau der Eingabevorrichtung und der benötigten Sensorik ermöglicht.

Diese Aufgabe wird durch eine erfindungsgemäße Eingabevorrichtung mit einer Berührplatte gelöst, welche eine Berühroberfläche aufweist und die auf einer der Berühroberfläche gegenüberliegenden Oberfläche zumindest teilweise mit einer elektrischen Widerstandsschicht beschichtet ist, wobei die elektrische Widerstandsschicht zumindest zwei elektrisch leitende Kontakte aufweist. Die Eingabevorrichtung umfasst ferner eine Messschaltung, die zur Messung eines Sensorkondensators eingerichtet ist, welcher durch die elektrische Widerstandsschicht und ein an einer Berührposition auf der Berühroberfläche angeordnetes elektrostatisch aufladbares Objekt gebildet wird, wobei die Messschaltung einen Referenzkondensator zum Ladungsausgleich mit dem Sensorkondensator bei der Messung der Berührposition umfasst. Außerdem ist eine Verarbeitungseinheit zur Bestimmung von Koordinaten der Berührposition des elektrostatisch aufladbaren Objekts auf der Berühroberfläche mittels Bestimmung der ohmschen Widerstände zwischen der Berührposition des elektrostatisch aufladbaren Objekts und den elektrisch leitenden Kontakten vorgesehen. Dies ermöglicht einen einfachen Aufbau der Eingabevorrichtung, da lediglich eine einzige elektrische Widerstandsschicht an der Berührplatte vorgesehen werden muss. Da die Widerstandsschicht auf der von der Berühroberfläche abgewandten Oberfläche angeordnet ist, ist die Widerstandsschicht durch die Berührplatte selbst vor Beschädigung geschützt. Durch Vorsehen eines Referenzkondensators mit bekannter Kapazität kann das Messverfahren vereinfacht werden.

Eine verbesserte Genauigkeit bei der Bestimmung der Koordinaten kann erreicht werden, indem mindestens drei elektrisch leitende Kontakte an der elektrischen Widerstandsschicht vorgesehen sind.

Die Messschaltung kann eine Mehrzahl von Schaltern aufweisen, die zum Laden eines durch die elektrische Widerstandsschicht und das elektrostatisch aufladbare Objekt gebildeten Sensorkondensators, zum Ladungsausgleich zwischen Sensorkondensator und Referenzkondensator und zum Entladen des Sensorkondensators und des Referenzkondensators ausgebildet sind.

Die elektrische Widerstandsschicht kann vollflächig oder ringförmig ausgebildet sein. Dies ermöglicht eine vielfältige und flexible Ausführung der Eingabevorrichtung.

Ein erfindungsgemäßes Verfahren zur Positionsbestimmung eines elektrostatisch aufladbaren Objekts auf einer Berührplatte einer oben beschriebenen Eingabevorrichtung umfasst die Verfahrensschritte des Messens eines RC-Glieds mit dem Sensorkondensator und dem ohmschen Widerstand zwischen der Berührposition des elektrostatisch aufladbaren Objekts und jeweils einem elektrostatisch leitenden Kontakt bei vollständiger elektrischer Ladung des Sensorkondensators; des Messens des RC-Glieds mit dem Sensorkondensator und dem ohmschen Widerstand zwischen der Berührposition des elektrostatisch aufladbaren Objekts und jeweils einem elektrostatisch leitenden Kontakt bei teilweiser elektrischer Ladung des Sensorkondensators; des Bestimmens des ohmschen Widerstands zwischen der Berührposition des elektrostatisch aufladbaren Objekts und jeweils einem elektrostatisch leitenden Kontakt mittels der Messungen des entsprechenden RC-Glieds; und des Bestimmens der Berührposition des elektrostatisch aufladbaren Objekts mittels der ohmschen Widerstände zwischen der Berührposition des elektrostatisch aufladbaren Objekts und den elektrisch leitenden Kontakten.

Es kann ein Verfahrensschritt vorgesehen sein, in dem die Kapazität des Sensorkondensators bestimmt wird.

Vorzugsweise wird bei der Messung des RC-Glieds eine Spannung über einem Referenzkondensator gemessen. Auf diese Weise wird das Messen des RC-Glieds durch eine einfache Spannungsmessung ermöglicht.

Vorzugsweise umfasst das Messen des RC-Glieds die Verfahrenschritte des vollständigen Entladens des Sensorkondensators und des Referenzkondensators; des vollständigen Aufladens des Sensorkondensators; des Ladungsausgleichs zwischen Sensorkondensator und Referenzkondensator; der Messung der Spannung über dem Referenzkondensator; und der Wiederholung der Verfahrensschritte bei teilweisem Aufladen des Sensorkondensators über eine Ladezeit.

Der ohmsche Widerstand zwischen der Berührposition des elektrostatisch aufladbaren Objekts und jeweils einem elektrisch leitenden Kontakt wird vorzugsweise nach der Formel:

$$R_n = \frac{V_{ref}\, t}{C_S U_{S1} ln\left(\frac{U_{S1}}{U_{S1}-U_{S2}}\right)}$$

berechnet, wobei $V_{ref}$ die Ladespannung des Sensorkondensators, t die Ladezeit bei teilweisem Aufladen des Sensorkondensators, $U_{S1}$ die Spannung über den Referenzkondensator bei vollständigem Aufladen des Sensorkondensators; $U_{S2}$ die Spannung über den Referenzkondensator bei teilweisem Aufladen des Sensorkondensators; und $C_S$ die Kapazität des Sensorkondensators ist.

Die Koordinaten der Berührposition des elektrostatisch aufladbaren Objekts berechnen sich vorzugsweise nach den Formeln:

$$X = \frac{\sum_{n=1}^{N} \frac{Xkontakt_n}{R_n{}^2}}{\sum_{n=1}^{N} \frac{1}{R_n{}^2}}$$

$$Y = \frac{\sum_{n=1}^{N} \frac{Ykontakt_n}{R_n{}^2}}{\sum_{n=1}^{N} \frac{1}{R_n{}^2}}$$

wobei $Xkontakt_n$ und $Ykontakt_n$ die Koordinaten des n-ten elektrisch leitenden Kontakts sind und $R_n$ der ohmsche Widerstand zwischen der Berührposition des elektrostatisch aufladbaren Objekts und des n-ten elektrisch leitenden Kontakts ist.

Weitere Merkmale und Vorteile der Erfindung ergeben sich aus der nachfolgenden Beschreibung und aus den Zeichnungen, auf die Bezug genommen wird. In diesen zeigen:

- Figur 1 eine perspektivische Ansicht einer Eingabevorrichtung gemäß einer ersten Ausführungsform der Erfindung;
- Figur 2 die Eingabevorrichtung gemäß Figur 1 als Ersatzschaltbild;
- Figur 3 eine Messschaltung einer erfindungsgemäßen Eingabevorrichtung;
- Figur 4 eine perspektivische Ansicht einer Eingabevorrichtung gemäß einer zweiten Ausführungsform der Erfindung; und
- Figur 5 die Eingabevorrichtung gemäß Figur 4 mit transparenter Berührplatte.

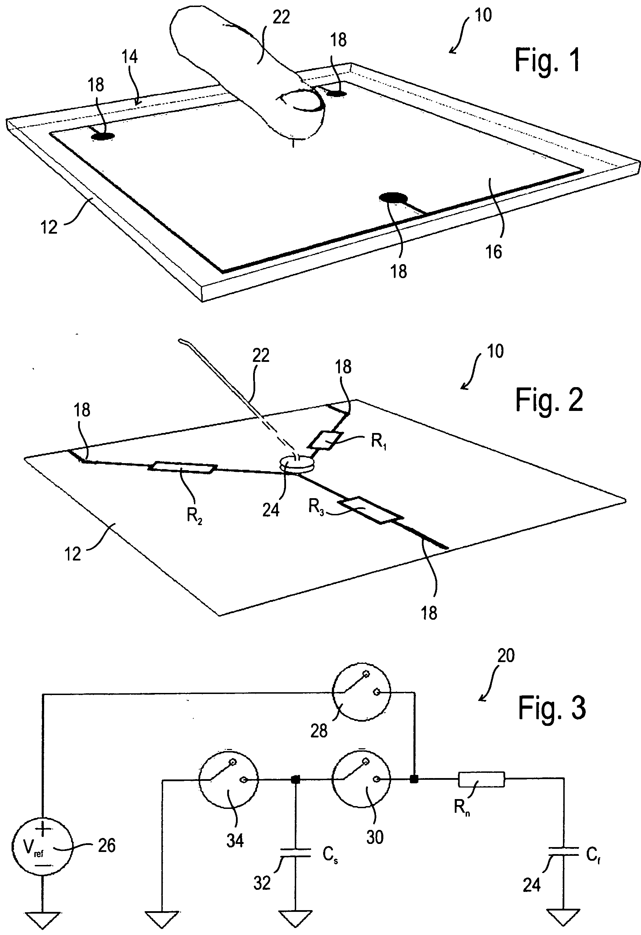

Figur 1 zeigt eine Eingabevorrichtung 10 mit einer transparent dargestellten Berührplatte 12. Die Berührplatte 12 weist eine Berühroberfläche 14 auf. Auf der von der Berühroberfläche 14 abgewandten Oberfläche der Berührplatte 12, also auf der "Rückseite", ist eine elektrische Widerstandsschicht 16 vorgesehen. Die Widerstandsschicht 16 ist über drei elektrisch leitende Kontakte 18 mit einer Messschaltung 20 verbunden.

Die elektrische Widerstandsschicht 16 ist vollflächig und rechteckig ausgebildet.

Ein elektrostatisch aufladbares Objekt, im gezeigten Ausführungsbeispiel ein Finger 22, liegt an einer Berührposition auf der Berühroberfläche 14 der Berührplatte 12 auf.

Figur 2 zeigt die Eingabevorrichtung 10 gemäß Figur 1 als Ersatzschaltbild. Durch das an der Berührposition auf der Berühroberfläche 14 angeordnete elektrostatisch aufladbare Objekt 22 wird ein Sensorkondensator 24 gebildet. Die elektrische Widerstandsschicht 16 bildet jeweils einen ohmschen Widerstand $R_1$, $R_2$, $R_3$ zwischen der Berührposition des elektrostatisch aufladbaren Objekts 22 und jeweils einem elektrisch leitenden Kontakt 18.

Figur 3 zeigt die Messschaltung 20 für einen Einzelwiderstand der ohmschen Widerstände $R_1$, $R_2$, $R_3$. Der entsprechende Einzelwiderstand wird im Folgenden als $R_n$ bezeichnet. Der ohmsche Widerstand $R_n$ ist mit dem Sensorkondensator 24 in Reihe geschaltet und bildet ein RC-Glied. Der Sensorkondensator 24 ist über das elektrostatisch aufladbare Objekt 22 mit einer Masse verbunden.

Eine Spannungsquelle 26 ist über einen ersten Schalter 28 mit dem RC-Glied verbunden und stellt eine Spannung $V_{ref}$ zur Verfügung. Das RC-Glied ist ferner über einen zweiten Schalter 30 mit einem Referenzkondensator 32 verbunden. Der Referenzkondensator 32 ist mit seinem zweiten Anschluss mit der Masse verbunden.

Ein dritter Schalter 34 ist mit dem Referenzkondensator 32 verbunden und ermöglicht eine Entladung des Referenzkondensators.

Im Folgenden wird ein Verfahren zur Positionsbestimmung des elektrostatisch aufladbaren Objekts 22 auf der Berührplatte 12 der Eingabevorrichtung 10 beschrieben.

In einem ersten Schritt wird das RC-Glied mit dem Sensorkondensator 24 und dem ohmschen Widerstand $R_n$ zwischen der Berührposition des elektrostatisch aufladbaren Objekts 22 und jeweils einem elektrisch leitenden Kontakt 18 bei vollständiger elektrischer Ladung des Sensorkondensators gemessen.

Dazu werden zuerst der Sensorkondensator 24 und der Referenzkondensator 32 vollständig entladen, indem der erste Schalter 28 geöffnet ist und der zweite und dritte Schalter 30, 34 jeweils geschlossen sind.

Darauffolgend wird der Sensorkondensator 24 vollständig aufgeladen, wobei der erste Schalter 28 geschlossen ist und der zweite Schalter 30 geöffnet ist. Um eine vollständige Aufladung des Sensorkondensators 24 zu ermöglichen, wird eine hinreichend lange Aufladedauer gewählt.

Anschließend wird ein Ladungsausgleich zwischen dem Sensorkondensator 24 und dem Referenzkondensator 32 durchgeführt, wobei der erste und dritte Schalter 28, 34 geöffnet sind und der zweite Schalter 30 geschlossen ist. Nach erfolgtem Ladungsausgleich wird die Spannung über dem Referenzkondensator 32 gemessen.

In einer darauffolgenden Messung des RC-Glieds wird der Sensorkondensator 24 bei teilweiser elektrischer Ladung gemessen. Die Messung erfolgt analog zur Messung bei vollständiger Ladung des Sensorkondensators 24, wobei die Ladezeit t so gewählt ist, dass der Sensorkondensator 24 nur teilweise aufgeladen wird.

Aus den Messungen des RC-Glieds bei vollständiger und teilweiser elektrischer Ladung des Sensorkondensators kann der ohmsche Widerstand $R_n$ zwischen der Berührposition des elektrostatisch aufladbaren Objekts 22 und jeweils einem elektrisch leitenden Kontakt 18 bestimmt werden. Dies erfolgt nach der Formel

$$R_n = \frac{V_{ref}\, t}{C_S U_{S1} ln\left(\frac{U_{S1}}{U_{S1} - U_{S2}}\right)}$$

Darin entspricht t der Ladezeit bei teilweisem Aufladen des Sensorkondensators, $U_{S1}$ der Spannung über dem Referenzkondensator 32 bei vollständigem Aufladen des Sensorkondensators 24, und $U_{S2}$ der Spannung über dem Referenzkondensator 32 bei teilweisem Aufladen des Sensorkondensators 24. $C_S$ ist die Kapazität des Referenzkondensators 32, und $V_{ref}$ ist die Spannung der Spannungsquelle, mit der der Sensorkondensator geladen wird.

Mittels der ohmschen Widerstände $R_n$ zwischen der Berührposition des elektrostatisch aufladbaren Objekts 22 und den elektrisch leitenden Kontakten 18 kann die Berührposition des elektrostatisch aufladbaren Objekts auf der Berührplatte 12 nach den Formeln

$$X = \frac{\sum_{n=1}^{N} \frac{Xkontakt_n}{R_n{}^2}}{\sum_{n=1}^{N} \frac{1}{R_n{}^2}}$$

$$Y = \frac{\sum_{n=1}^{N} \frac{Ykontakt_n}{R_n{}^2}}{\sum_{n=1}^{N} \frac{1}{R_n{}^2}}$$

berechnet werden, wobei $Xkontakt_n$ und $Ykontakt_n$ die Koordinaten des n-ten elektrisch leitenden Kontakts 18 sind.

In den Formeln für die Koordinaten (X, Y) der Berührposition des elektrostatisch aufladbaren Objekts 22 fällt die Kapazität $C_s$ des Referenzkondensators 32 als Proportionalitätskonstante aufgrund der Normierung heraus und wird somit zur Bestimmung der Koordinaten (X, Y) nicht explizit benötigt.

In einer Verfahrensvariante können weitere Messungen des RC-Glieds bei teilweiser elektrischer Ladung durchgeführt werden, wobei unterschiedliche Ladezeiten vorgesehen sind. Auf diese Weise kann eine Ladezeit t gewählt werden, die eine geringe Messungenauigkeit bei der Bestimmung des ohmschen Widerstands $R_n$ ermöglicht. Die optimale Ladezeit variiert mit unterschiedlicher Kapazität $C_f$ des Sensorkondensators 24, die wiederum von der Art der Berührung der Berühroberfläche 14 mit dem Objekt 22, insbesondere eines Fingers, abhängig ist.

In der gezeigten Ausführungsform ist die Berührplatte 12 mit der elektrischen Widerstandsschicht 16 jeweils im Wesentlichen quadratisch ausgebildet. Es können aber auch andere Geometrien vorgesehen sein, beispielsweise Rechteck- oder Kreisformen. Die Anordnung der Kontakte 18 kann dabei jeweils auf die entsprechende geometrische Form angepasst werden, wobei jeweils mindestens zwei elektrisch leitende Kontakte vorgesehen sind.

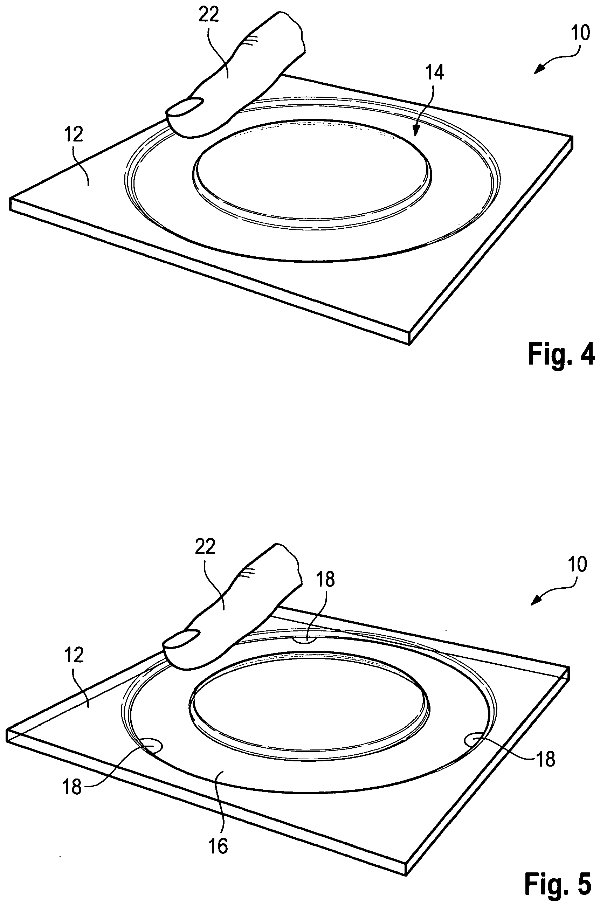

In den Figuren 5 und 6 ist eine zweite Ausführungsform der Erfindung gezeigt. Figur 4 zeigt eine Eingabevorrichtung 10 mit einer Berührplatte 12, die mit einer ringförmigen Vertiefung vorgesehen ist. Im Bereich der ringförmigen Vertiefung ist auf der Unterseite der Berührplatte 12 eine elektrisch leitende Widerstandsschicht 16 vorgesehen, die mit drei elektrisch leitenden Kontakten 18 versehen ist. In Figur 5 ist die Berührplatte 12 transparent dargestellt.

Es kann auch eine ringförmige Geometrie vorgesehen sein, die nicht kreisförmig, sondern polygonförmig ausgebildet ist.

Die Berechnung der Koordinaten ist entsprechend an die Geometrie der elektrischen Widerstandsschicht 16 angepasst.

Die Berührplatte 12 ist vorzugsweise im Bereich der elektrischen Widerstandsschicht 16 mit einer geringen Dicke ausgebildet, um verbesserte Messergebnisse des Sensorkondensators 24 zu erhalten.

**Patentansprüche**

1. Eingabevorrichtung (10) mit
einer Berührplatte (12), welche eine Berühroberfläche (14) aufweist und die auf einer von der Berühroberfläche (14) abgewandten Oberfläche zumindest teilweise mit einer elektrischen Widerstandsschicht (16) beschichtet ist, wobei die elektrische Widerstandsschicht (16) zumindest zwei elektrisch leitende Kontakte (18) aufweist,

und einer Messschaltung (20), die zur Messung eines Sensorkondensators (24) eingerichtet ist, welcher durch die elektrische Widerstandsschicht (16) und ein an einer Berührposition auf der Berühroberfläche (14) angeordnetes elektrostatisch aufladbares Objekt (22) gebildet wird, wobei die Messschaltung (20) einen Referenzkondensator (32) zum Ladungsausgleich mit dem Sensorkondensator (24) bei der Messung der Berührposition umfasst, wobei eine Verarbeitungseinheit vorgesehen ist, die derart eingerichtet ist, die Koordinaten (X, Y) der Berührposition des elektrostatisch aufladbaren Objekts (22) auf der Berühroberfläche (14) mittels Bestimmung der ohmschen Widerstände ($R_1$, $R_2$, $R_3$, $R_n$) zwischen der Berührposition des elektrostatisch aufladbaren Objekts (22) und den elektrisch leitenden Kontakten (18) zu bestimmen.

2. Eingabevorrichtung nach Anspruch 1, **dadurch gekennzeichnet, dass** mindestens drei elektrisch leitende Kontakte (18) an der elektrischen Widerstandsschicht (16) vorgesehen sind.

3. Eingabevorrichtung nach einem der vorhergehenden Ansprüche, **dadurch gekennzeichnet, dass** die Messschaltung (20) eine Mehrzahl von Schaltern (28, 30, 34) zum Laden eines durch die elektrische Widerstandsschicht (16) und das elektrostatisch aufladbare Objekt (22) gebildeten Sensorkondensators (24), zum Ladungsausgleich zwischen Sensorkondensator (24) und Referenzkondensator (32) und zum Entladen des Sensorkondensators (24) und des Referenzkondensators (32) aufweist.

4. Eingabevorrichtung nach einem der vorhergehenden Ansprüche, **dadurch gekennzeichnet, dass** die elektrische Widerstandsschicht (16) vollflächig oder ringförmig ausgebildet ist.

5. Verfahren zur Positionsbestimmung eines elektrostatisch aufladbaren Objekts (22) auf einer Berührplatte (12) einer Eingabevorrichtung (10) nach einem der vorhergehenden Ansprüche, mit den Verfahrensschritten:

   - Messen eines RC-Glieds mit dem Sensorkondensator ($C_f$) und dem ohmschen Widerstand ($R_n$) zwischen der Berührposition des elektrostatisch aufladbaren Objekts (22) und jeweils einem elektrisch leitenden Kontakt (18) bei vollständiger elektrischer Ladung des Sensorkondensators ($C_f$);
   - Messen des RC-Glieds mit dem Sensorkondensator ($C_f$) und dem ohmschen Widerstand ($R_n$) zwischen der Berührposition des elektrostatisch aufladbaren Objekts (22) und jeweils einem elektrisch leitenden Kontakt (18) bei teilweiser elektrischer Ladung des Sensorkondensators ($C_f$);
   - Bestimmen des ohmschen Widerstand ($R_n$) zwischen der Berührposition des elektrostatisch aufladbaren Objekts (22) und jeweils einem elektrisch leitenden Kontakt (18) durch das Messen des entsprechenden RC-Glieds;
   - Bestimmen der Berührposition des elektrostatisch aufladbaren Objekts (22) mittels der ohmschen Widerstände ($R_n$) zwischen der Berührposition des elektrostatisch aufladbaren Objekts (22) und den elektrisch leitenden Kontakten (18).

6. Verfahren nach Anspruch 5, wobei in einem Verfahrensschritt die Kapazität des Sensorkondensators ($C_f$) bestimmt wird.

7. Verfahren nach Anspruch 5 oder 6, wobei beim Messen des RC-Glieds eine Spannung ($U_s$) über einem Referenzkondensator ($C_s$) gemessen wird.

8. Verfahren nach Anspruch 7, wobei das Messen des RC-Glieds die Verfahrensschritte umfasst:

   - Vollständiges Entladen des Sensorkondensators ($C_f$) und des Referenzkondensators ($C_s$);
   - Vollständiges Aufladen des Sensorkondensators ($C_f$);
   - Ladungsausgleich zwischen Sensorkondensator ($C_f$) und Referenzkondensator ($C_s$);
   - Messen der Spannung ($U_s$) über dem Referenzkondensator ($C_s$);
   - Wiederholen der Verfahrensschritte bei teilweisem Aufladen des Sensorkondensators ($C_f$) über eine Ladezeit (t).

9. Verfahren nach Anspruch 8, **dadurch gekennzeichnet, dass** der ohmsche Widerstand ($R_n$) zwischen der Berührposition des elektrostatisch aufladbaren Objekts (22) und jeweils einem elektrisch leitenden Kontakt (18) nach der Formel:

$$R_n = \frac{V_{ref}\, t}{C_S U_{S1} \ln\left(\frac{U_{S1}}{U_{S1} - U_{S2}}\right)}$$

berechnet wird, wobei

   $V_{ref}$ die Spannung ist, mit der $C_f$ aufgeladen wird,
   $t$ die Ladezeit bei teilweisem Aufladen des Sensorkondensators,
   $U_{S1}$ die Spannung über den Referenzkondensator bei vollständigem Aufladen des Sensorkondensators;
   $U_{S2}$ die Spannung über den Referenzkondensator bei teilweisem Aufladen des Sensorkondensators;

$C_S$ die Kapazität des Sensorkondensators ist.

10. Verfahren nach einem der Ansprüche 5 bis 9, **dadurch gekennzeichnet, dass** die Koordinaten (X, Y) der Berührposition des elektrostatisch aufladbaren Objekts (22) nach der Formel:

$$X = \frac{\sum_{n=1}^{N} \frac{Xkontakt_n}{R_n^2}}{\sum_{n=1}^{N} \frac{1}{R_n^2}}$$

$$Y = \frac{\sum_{n=1}^{N} \frac{Ykontakt_n}{R_n^2}}{\sum_{n=1}^{N} \frac{1}{R_n^2}}$$

berechnet wird, wobei

$Xkontakt_n$ und $Ykontakt_n$ die Koordinaten den n-ten elektrisch leitenden Kontakts (18) sind und $R_n$ der ohmsche Widerstand zwischen der Berührposition des elektrostatisch aufladbaren Objekts (22) und des n-ten elektrisch leitenden Kontakts (18) ist.

**Claims**

1. An input device (10) comprising
a contact plate (12) which includes a contact surface (14) and is at least partially coated with an electrical resistive layer (16) on a surface facing away from the contact surface (14), the electrical resistive layer (16) including at least two electrically conducting contacts (18),
and a measuring circuit (20) which is configured to measure a sensing capacitor (24) formed by the electrical resistive layer (16) and an electrostatically chargeable object (22) arranged at a contact position on the contact surface (14), the measuring circuit (20) comprising a reference capacitor (32) for charge equalization with the sensing capacitor (24) when the contact position is measured,
a processing unit being provided which is configured to determine the coordinates (X, Y) of the contact position of the electrostatically chargeable object (22) on the contact surface (14) by determining the ohmic resistances ($R_1$, $R_2$, $R_3$, $R_n$) between the contact position of the electrostatically chargeable object (22) and the electrically conducting contacts (18).

2. The input device according to claim 1, **characterized in that** at least three electrically conducting contacts (18) are provided on the electrical resistive layer (16).

3. The input device according to either of the preceding claims, **characterized in that** the measuring circuit (20) includes a plurality of switches (28, 30, 34) for charging a sensing capacitor (24) formed by the electrical resistive layer (16) and the electrostatically chargeable object (22), for charge equalization between the sensing capacitor (24) and the reference capacitor (32) and for discharging the sensing capacitor (24) and the reference capacitor (32).

4. The input device according to any of the preceding claims, **characterized in that** the electrical resistive layer (16) is formed so as to fully cover a surface area or so as to be ring-shaped.

5. A method of determining the position of an electrostatically chargeable object (22) on a contact plate (12) of an input device (10) according to any of the preceding claims, comprising the process steps of:

- measuring an RC element with the sensing capacitor ($C_f$) and the ohmic resistance ($R_n$) between the contact position of the electrostatically chargeable object (22) and each one of the electrically conducting contacts (18) when the sensing capacitor ($C_f$) is fully electrically charged;
- measuring the RC element with the sensing capacitor ($C_f$) and the ohmic resistance ($R_n$) between the contact position of the electrostatically chargeable object (22) and each one of the electrically conducting contacts (18) when the sensing capacitor ($C_f$) is partially electrically charged;
- determining the ohmic resistance ($R_n$) between the contact position of the electrostatically chargeable object (22) and each one of the electrically conducting contacts (18) by measuring the corresponding RC element;
- determining the contact position of the electrostatically chargeable object (22) by means of the ohmic resistances ($R_n$) between the contact position of the electrostatically chargeable object (22) and the electrically conducting contacts (18).

6. The method according to claim 5, wherein the capacitance of the sensing capacitor ($C_f$) is determined in a process step.

7. The method according to claim 5 or 6, wherein a voltage ($U_s$) across a reference capacitor ($C_s$) is measured when the RC element is measured.

8. The method according to claim 7, wherein measuring the RC element comprises the process steps of:

- fully discharging the sensing capacitor ($C_f$) and the reference capacitor ($C_s$);
- fully charging the sensing capacitor ($C_f$);

- charge equalization between the sensing capacitor ($C_f$) and the reference capacitor ($C_s$);
- measuring the voltage ($U_s$) across the reference capacitor ($C_s$);
- repeating the process steps while partially charging the sensing capacitor ($C_f$) for a charging time ($t$).

9. The method according to claim 8, **characterized in that** the ohmic resistance ($R_n$) between the contact position of the electrostatically chargeable object (22) and each one of the electrically conducting contacts (18) is calculated according to the formula:

$$R_n = \frac{V_{ref}\, t}{C_S U_{S1} ln\left(\frac{U_{S1}}{U_{S1}-U_{S2}}\right)}$$

wherein

$V_{ref}$ is the voltage at which $C_f$ is charged,
$t$ is the charging duration when partially charging the sensing capacitor,
$U_{S1}$ is the voltage across the reference capacitor when fully charging the sensing capacitor;
$U_{S2}$ is the voltage across the reference capacitor when partially charging the sensing capacitor;
$C_S$ is the capacitance of the sensing capacitor.

10. The method according to any of claims 5 to 9, **characterized in that** the coordinates (X, Y) of the contact position of the electrostatically chargeable object (22) are calculated according to the formulas:

$$X = \frac{\sum_{n=1}^{N}\frac{Xkontakt_n}{R_n^{\,2}}}{\sum_{n=1}^{N}\frac{1}{R_n^{\,2}}}$$

$$Y = \frac{\sum_{n=1}^{N}\frac{Ykontakt_n}{R_n^{\,2}}}{\sum_{n=1}^{N}\frac{1}{R_n^{\,2}}}$$

wherein

$Xkontakt_n$ and $Ykontakt_n$ are the coordinates of the nth electrically conducting contact (18), and $R_n$ is the ohmic resistance between the contact position of the electrostatically chargeable object (22) and the nth electrically conducting contact (18).

**Revendications**

1. Dispositif d'entrée (10), comportant
une plaque de contact (12) qui présente une surface de contact (14) et qui est revêtue au moins partiellement d'une couche résistive électrique (16) sur une surface détournée de la surface de contact (14), la couche résistive électrique (16) présentant au moins deux contacts électroconducteurs (18),
et un circuit de mesure (20) qui est aménagé pour la mesure d'un condensateur détecteur (24) lequel est formé par la couche résistive électrique (16) et un objet électrostatiquement chargeable (22) agencé dans une position de contact sur la surface de contact (14), le circuit de mesure (20) comprenant un condensateur de référence (32) pour un équilibrage de charge avec le condensateur détecteur (24) lors de la mesure de la position de contact,
une unité de traitement étant prévue, laquelle est aménagée de manière à déterminer les coordonnées (X, Y) de la position de contact le l'objet électrostatiquement chargeable (22) sur la surface de contact (14) par détermination de la résistance ohmique ($R_1$, $R_2$, $R_3$, $R_n$) entre la position de contact de l'objet électrostatiquement chargeable (22) et les contacts électroconducteurs (18).

2. Dispositif d'entrée selon la revendication 1, **caractérisé en ce qu'**il est prévu au moins trois contacts électroconducteurs (18) sur la couche résistive électrique (16).

3. Dispositif d'entrée selon l'une des revendications précédentes, **caractérisé en ce que** le circuit de mesure (20) présente une pluralité de commutateurs (28, 30, 34) pour charger un condensateur détecteur (24) formé par la couche résistive électrique (16) et l'objet électrostatiquement chargeable (22), pour un équilibrage de charge entre le condensateur détecteur (24) et le condensateur de référence (32), et pour décharger le condensateur détecteur (24) et le condensateur de référence (32).

4. Dispositif d'entrée selon l'une des revendications précédentes, **caractérisé en ce que** la couche résistive électrique (16) est réalisée sur toute la surface ou en forme d'anneau.

5. Procédé de détermination de la position d'un objet électrostatiquement chargeable (22) sur une plaque de contact (12) d'un dispositif d'entrée (10) selon l'une des revendications précédentes, comprenant les étapes de procédé suivantes :

- mesure d'un circuit RC au moyen du condensateur détecteur ($C_f$) et de la résistance ohmique ($R_n$) entre la position de contact de l'objet électrostatiquement chargeable (22) et un contact électroconducteur (18) respectif lors d'un chargement électrique complet du condensateur détecteur (C$_f$);

- mesure du circuit RC au moyen du condensateur détecteur (C$_f$) et de la résistance ohmique (R$_n$) entre la position de contact de l'objet électrostatiquement chargeable (22) et un contact électroconducteur (18) respectif lors d'un chargement électrique partiel du condensateur détecteur (C$_f$) ;

- détermination de la résistance ohmique (R$_n$) entre la position de contact de l'objet électrostatiquement chargeable (22) et un contact électroconducteur (18) respectif par la mesure du circuit RC correspondant ;

- détermination de la position de contact de l'objet électrostatiquement chargeable (22) au moyen des résistances ohmiques (R$_n$) entre la position de contact de l'objet électrostatiquement chargeable (22) et les contacts électroconducteurs (18).

6. Procédé selon la revendication 5, la capacité du condensateur détecteur (C$_f$) étant déterminée dans une étape du procédé.

7. Procédé selon la revendication 5 ou 6, une tension (U$_s$) au condensateur de référence (C$_s$) étant mesurée lors de la mesure du circuit RC.

8. Procédé selon la revendication 7, la mesure du circuit RC comprenant les étapes de procédé suivantes :

- décharge complète du condensateur détecteur (C$_f$) et du condensateur de référence (C$_s$);
- chargement complet du condensateur détecteur (C$_f$) ;
- équilibrage de charge entre le condensateur détecteur (C$_f$) et le condensateur de référence (C$_s$) ;
- mesure de la tension (U$_s$) au condensateur de référence (C$_s$) ;
- répétition des étapes de procédé lors du chargement partiel du condensateur détecteur (C$_f$) sur un temps de chargement (t).

9. Procédé selon la revendication 8, **caractérisé en ce que** la résistance ohmique (R$_n$) entre la position de contact de l'objet électrostatiquement chargeable (22) et un contact électroconducteur (18) respectif est calculée selon la formule :

$$R_n = \frac{V_{ref}\, t}{C_S U_{S1} ln\left(\frac{U_{S1}}{U_{S1} - U_{S2}}\right)}$$

$V_{ref}$ étant la tension avec laquelle C$_f$ est chargée,
$t$ étant le temps de chargement lors du chargement partiel du condensateur détecteur,
$U_{S1}$ étant la tension au condensateur de référence lors du chargement complet du condensateur détecteur,
$U_{S2}$ étant la tension au condensateur de référence lors du chargement partiel du condensateur détecteur,
$C_S$ étant la capacité du condensateur détecteur.

10. Procédé selon l'une des revendications 5 à 9, **caractérisé en ce que** les coordonnées (X, Y) de la position de contact de l'objet électrostatiquement chargeable (22) sont calculées selon la formule :

$$X = \frac{\sum_{n=1}^{N} \frac{Xkontakt_n}{R_n{}^2}}{\sum_{n=1}^{N} \frac{1}{R_n{}^2}}$$

$$Y = \frac{\sum_{n=1}^{N} \frac{Ykontakt_n}{R_n{}^2}}{\sum_{n=1}^{N} \frac{1}{R_n{}^2}}$$

$Xkontakt_n$ et $Ykontakt_n$ étant les coordonnées du n$^{ième}$ contact électroconducteur (18), et
$R_n$ étant la résistance ohmique entre la position de contact de l'objet électrostatiquement chargeable (22) et le n$^{ième}$ contact électroconducteur (18).

Fig. 1

Fig. 2

Fig. 3

22

12

14

10

**Fig. 4**

22

18

12

18

16

18

10

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3230919 A1
- US 7148704 B2

- US 20070165004 A1